# EUROPEAN PATENT APPLICATION

(11) **EP 4 557 088 A1**
(43) Date of publication of application: **21.05.2025**
(21) Application number: 22956749.0
(22) Date of filing: 29.08.2022
(51) Int. Cl.: G06F 9/44

(54) **METHOD FOR GENERATING CODE FOR DESCRIBING REMOTE PROCEDURE CALL, AND ELECTRONIC DEVICE, MEDIUM AND PROGRAM PRODUCT**

(71) Applicant: Siemens Aktiengesellschaft, 80333 München (DE)
(72) Inventor: ZHU, Yi Peng, Suzhou, Jiangsu 215025 (CN)
(74) Representative: Isarpatent
(86) International application number: PCT/CN2022/115622
(87) International publication number: WO 2024/044914

(57) **Abstract**

Embodiments of this application mainly relate to the field of remote procedure call, and in particular, to a method for generating code for describing a remote procedure call, an electronic device, a medium, and a program product. Code of a specified function in service code written by a user is marked by using singleton code, to obtain first code; the code of the specified function in the service code written by the user is marked by using decorator code, to obtain second code; the first code and the second code are parsed by using a specified lexical and grammar analysis tool; and the code for describing a remote procedure call is generated.

## Description

### TECHNICAL FIELD

Embodiments of this application mainly relate to the field of remote procedure call, and in particular, to a method for generating code for describing a remote procedure call, an electronic device, a medium, and a program product.

### BACKGROUND

A remote procedure call (Remote Procedure Call, RPC) is a process in which one node requests another remote node to provide a service, that is, a process of calling a remote machine. This corresponds to a local procedure call, and an objective thereof is to make it convenient to call a remote method like calling a local method. Although the RPC defines a set of interface methods, currently, if a user expects that a service function can be called remotely, in addition to defining the service function, the user further needs to define a specific interface implementation. Obviously, operations of the user in a current state are more complicated and restrictive.

### SUMMARY

Embodiments of this application provide a method for generating code for describing a remote procedure call, an electronic device, a medium, and a program product, to help a user quickly and automatically define a corresponding interface implementation, thereby establishing the remote procedure call. A remote procedure call framework is completely decoupled from service code, which also provides more flexibility when the user writes the service code.

According to a first aspect, a method for generating code for describing a remote procedure call is provided, including: marking, by using singleton code, code of a specified function in service code written by a user, to obtain first code; marking, by using decorator code, the code of the specified function in the service code written by the user, to obtain second code; parsing the first code and the second code by using a specified lexical and grammar analysis tool; and generating the code for describing a remote procedure call.

According to a second aspect, an electronic device is provided, including: at least one memory, configured to store computer-readable code; and at least one processor, configured to invoke the computer-readable code to perform the steps of the method provided in the first aspect.

According to a third aspect, a computer-readable medium is provided, where the computer-readable medium stores computer-readable instructions, and when the computer-readable instructions are executed by a processor, the processor is enabled to implement the steps of the method provided in the first aspect.

According to a fourth aspect, a computer program product is provided, where the computer program product is physically stored on a computer-readable medium and includes computer-readable instructions, and when the computer-readable instructions are executed, at least one processor is enabled to implement the steps of the method provided in the first aspect.

### BRIEF DESCRIPTION OF THE DRAWINGS

The following accompanying drawings are only intended to give schematic illustrations and explanations of the embodiments of this application, but are not intended to limit the scope of this application, where:
FIG. 1 is a flowchart of a method for generating code for describing a remote procedure call according to an embodiment of this application; and
FIG. 2 is a schematic diagram of an electronic device according to an embodiment of this application.

Descriptions of reference numerals:
100: method for generating code for describing a remote procedure call
101 to 105: method steps
200: electronic device 201: memory 202: processor

### DETAILED DESCRIPTION

A subject described in this specification is discussed now with reference to exemplary implementations. It should be understood that, discussion of the implementations is merely intended to make a person skilled in the art better understand and implement the subject described in this specification, and is not intended to limit the protection scope of the claims, the applicability, or examples. Changes may be made to the functions and arrangements of the discussed elements without departing from the protection scope of the content of the embodiments of this application. Various processes or components may be omitted, replaced, or added in each example according to requirements. For example, the described method may be performed according to a sequence different from the sequence described herein, and steps may be added, omitted, or combined. In addition, features described in some examples may also be combined in other examples.

As used in this specification, the term "include" and variants thereof represent open terms, and means "include but is not limited to". The term "based on" represents "at least partially based on". The terms "one embodiment" and "an embodiment" represent "at least one embodiment". The term "another embodiment" represents "at least one another embodiment". The terms "first", "second", and the like may represent different objects or the same object. Other definitions may be included explicitly or implicitly in the following. Unless otherwise clearly specified, the definition of one term is consistent in the entire specification.

The following describes in detail the embodiments of this application with reference to the accompanying drawings.

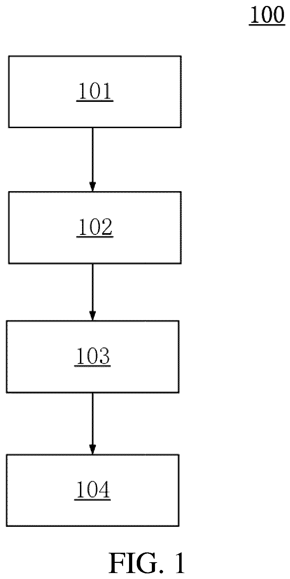

FIG. 1 is a flowchart of a method for generating code for describing a remote procedure call according to an embodiment of this application. As shown in FIG. 1, the method 100 for generating code for describing a remote procedure call includes the following steps.

Step 101: Mark, by using singleton code, code of a specified function in service code written by a user, to obtain first code.

The singleton code can not only mark a service function that the user plans to be exposed in the RPC, but also instantiate code of the corresponding service function. The singleton code may ensure that one class in the code of the service function has only one instance, and provide one global access point for accessing the instance.

Step 102: Mark, by using decorator code, the code of the specified function in the service code written by the user, to obtain second code.

The decorator code is a new modem programming method, that is, aspect oriented programming (aspect oriented programming), and belongs to a high level language. Optionally, a marking manner may be adding a mark such as "@public" to the code of the specified function.

Step 103: Parse the first code and the second code by using a specified lexical and grammar analysis tool.

The specified lexical and grammar analysis tool may be, for example, Flex&Bison or Antlr4, which includes a user-defined grammar rule of singleton code and a lexical rule and a grammar rule of decorator code.

Optionally, before the first code and the second code are parsed, lexicon and grammar of the first code and the second code are separately checked by using an inference engine. When there is an error in the lexicon and the grammar of the first code or the second code, the corresponding error is corrected according to a preset error correction rule of the lexicon and the grammar.

Step 104: Generate the code for describing a remote procedure call.

The code for describing a remote procedure call is generated by using rules of semantic communication. Optionally, the rules of semantic communication include: a field bus communication rule, a data bus communication rule, or a point-to-point communication rule. Optionally, the rules of semantic communication include: DDS, MQTT, HTTP, or ModBus.

Optionally, after the code for describing a remote procedure call is generated, the service code, the first code, and the code for describing a remote procedure call are compiled and linked in a meta-programming framework by using the specified lexical and grammar analysis tool, to output target code that is capable of running on a common platform. Optionally, the service code, the first code, the second code, and the code for describing a remote procedure call may alternatively be compiled and linked in the meta-programming framework, to output the target code that is capable of running on the common platform. Compiling refers to translating source code into target code in a computer-recognizable binary format. Linking refers to a process of combining all related target files and system components into one executable file, that is, one "package". Optionally, the common platform refers to, for example, an ARM architecture or an X86 architecture.

According to this embodiment of this application, the singleton code and the decorator code are separately added to the code of the specified function in the service code written by the user, parsing is performed by using the specified lexical and grammar analysis tool, the code for describing a remote procedure call is generated, and finally, the target code that is capable of running on the common platform is obtained after related code is compiled and linked. If the target code is run, an interface may be exposed. This embodiment of this application provides a friendly application development framework for an open ecosystem, may completely decouple a remote procedure call framework from service code, provides more flexibility when a user writes service code, and may allow the user to define a public rule from bottom to top. The user may write service code in a code editor of an application (APP) integrated development environment (integrated development environment, IDE) by using a low level language such as C/C++, that is, the user may select a language type for writing the service code more freely. The low level language has high execution efficiency and higher controllability to hardware. In addition, some service code needs to be written in the low level language due to a limitation of a corresponding interface.

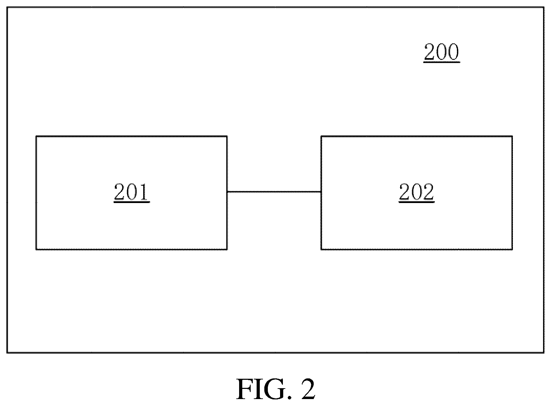

An embodiment of this application further proposes an electronic device 200. FIG. 2 is a schematic diagram of an electronic device 200 according to an embodiment of this application. As shown in FIG. 2, the electronic device 200 includes a processor 202 and a memory 201. The memory 201 stores instructions, and the instructions are executed by the processor 202 to implement the method 100.

At least one processor 202 may include a microprocessor, an application-specific integrated circuit (ASIC), a digital signal processor (DSP), a central processing unit (CPU), a graphics processing unit (GPU), a state machine, and the like. An embodiment of the computer-readable medium includes, but is not limited to, a floppy disk, a CD-ROM, a magnetic disk, a memory chip, a ROM, a RAM, an ASIC, a configured processor, an all-optical medium, all magnetic tapes or other magnetic media, or any other media from which a computer processor may read an instruction. In addition, the computer-readable medium in various other forms may send or carry instructions to the computer, including a router, a private or public network, or other wired or wireless transmission devices or channels. The instructions may include code of any computer programming language, including C, C++, C language, Visual asic, java, and JavaScript.

In addition, an embodiment of this application further provides a computer-readable medium, the computer-readable medium stores computer-readable instructions, and when the computer-readable instructions are executed by a processor, the processor is enabled to implement the method 100 for generating code for describing a remote procedure call. An embodiment of the computer-readable medium includes a floppy disk, a hard disk, a magnetooptical disk, an optical disk (for example, a CD-ROM, a CD-R, a CD-RW, a DVD-ROM, a DVD-RAM, a DVD-RW, or a DVD-RW), a magnetic tape, a non-volatile storage card, and a ROM. Optionally, the computer-readable instructions may be downloaded from a server computer or a cloud by using a communication network. In addition, an embodiment of this application further provides a computer program product, where the computer program product is physically stored on a computer-readable medium and includes computer-readable instructions, and when the computer-readable instructions are executed, at least one processor is enabled to implement the steps in the method 100 for generating code for describing a remote procedure call in this embodiment of this application.

It should be noted that, not all steps and modules in the procedures and the diagrams of the system structures are necessary, and some steps or modules may be omitted according to an actual requirement. An execution sequence of the steps is not fixed and may be adjusted according to a requirement. The system structure described in the embodiments may be a physical structure or a logical structure. That is, some modules may be implemented by the same physical entity, or some modules may be implemented by a plurality of physical entities, or may be implemented by some components in a plurality of independent devices together.

## Claims

1. A method for generating code for describing a remote procedure call, comprising:
- marking (101), by using singleton code, code of a specified function in service code written by a user, to obtain first code;
- marking (102), by using decorator code, the code of the specified function in the service code written by the user, to obtain second code;
- parsing (103) the first code and the second code by using a specified lexical and grammar analysis tool; and
- generating (104) the code for describing a remote procedure call.

2. The method according to claim 1, wherein after the generating (104) the code for describing a remote procedure call, the method further comprises:
- compiling and linking, by using the specified lexical and grammar analysis tool in a meta-programming framework, the service code, the first code, and the code for describing a remote procedure call; and
- outputting target code that is capable of running on a common platform.

3. The method according to claim 1, wherein before the parsing (103) the first code and the second code, the method further comprises:
- separately checking lexicon and grammar of the first code and the second code by using an inference engine; and
- correcting, when there is an error in the lexicon and the grammar of the first code or the second code, the corresponding error according to a preset error correction rule of the lexicon and the grammar.

4. The method according to claim 1, wherein the generating (104) the code for describing a remote procedure call comprises:
- generating, by using rules of semantic communication, the code for describing a remote procedure call.

5. The method according to claim 4, wherein the rules of semantic communication comprise: a field bus communication rule, a data bus communication rule, or a point-to-point communication rule.

6. The method according to claim 4, wherein the semantic communication rule comprises: DDS, MQTT, HTTP, or ModBus.

7. An electronic device, comprising:
at least one memory (201), configured to store computer-readable code; and
at least one processor (202), configured to invoke the computer-readable code, to perform the steps in the method according to any one of claims 1 to 6.

8. A computer-readable medium, wherein the computer-readable medium stores computer-readable instructions, and when the computer-readable instructions are executed by the processor, the processor is enabled to implement the steps in the method according to any one of claims 1 to 6.

9. A computer program product, wherein the computer program product is physically stored on a computer-readable medium and comprises computer-readable instructions, and when the computer-readable instructions are executed, at least one processor is enabled to implement the steps in the method according to any one of claims 1 to 6.
